(19)

**Europäisches Patentamt**

**European Patent Office**

**Office européen des brevets**

(11) **EP 4 696 990 A1**

(12) **EUROPEAN PATENT APPLICATION**

(43) Date of publication:
**18.02.2026 Bulletin 2026/08**

(21) Application number: **25190878.6**

(22) Date of filing: **22.07.2025**

(51) International Patent Classification (IPC):
**G01D 5/244** (2006.01)

(52) Cooperative Patent Classification (CPC):
**G01D 5/2452; G01D 5/24466; G01D 5/2448; G01D 5/24485**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.08.2024 US 202418807254**

(71) Applicant: **Analog Devices International Unlimited Company Co. Limerick (IE)**

(72) Inventors:
• **McCartney, Damien J.**
  **Limerick (IE)**
• **O'Shaughnessy, Anthony**
  **Limerick (IE)**
• **Schmitt, Jochen**
  **Limerick (IE)**

(74) Representative: **Horler, Philip John Withers & Rogers LLP 2 London Bridge London SE1 9RA (GB)**

(54) **DETECTION OF MECHANICAL RUNOUT**

(57)    Disclosed herein are techniques for detecting runout of a rotating mechanical component. In example, detection of runout of a rotating mechanical component is performed using an angular position signal generated by a magnetic angular position sensor that is arranged for use in determining an angular position of the rotating mechanical component.

Fig. 5

# EP 4 696 990 A1

## Description

This application claims priority from US patent application number 18/807254 filed 16 August 2024.

## Technical field

The precent disclosure relates to systems and methods for detecting runout of a rotating mechanical component.

## Background

In mechanical devices with rotating components, for example rotating tools or shafts, it may be important for each rotating component to rotate as closely as possible in line with its main axis. Deviation from the main axis is typically referred to as run-out or runout (and sometimes as eccentricity) and can cause various problems for the mechanical device, such as inaccurate operation, reduced mechanical reliability, reduced device lifetime, etc. For example, runout in a drill is likely to cause the drill to create a larger hole than desired owing to the drill rotating eccentrically (i.e., rotating with eccentricity around its main axis rather than in line with its main axis). In another example, runout of a rotating axle or shaft may cause unwanted vibration and damage to the mechanical device, as well as a reduction in mechanical efficiency.

Runout may be caused by a number of different factors. In some instances it is caused by imperfections in manufacturing and/or calibration of the mechanical device, meaning that runout takes place from the very start of the device life. In other instances, runout starts or gets worse during the lifetime of the mechanical device, for example as a result of component wear (such as bearing wear or damage) and/or uneven loading of the rotating component and/or environmental conditions.

The extent to which runout can be tolerated will depend on the particular mechanical device. For some devices, runout in the order of 10s or 100s of micrometres (for example, 10, 50 or 100 $\mu$m) may be a problem, and for other devices it may become a problem only when runout is in the order of millimetres (such as 5, 20 or 100 mm). Detecting runout can be challenging and often involves relatively expensive equipment. Typically, for mechanical devices where minimisation of runout is very important, specialised instruments such as dial gauges or laser micrometres are used by trained operators to detect runout, meaning that runout is typically only detected during initial assembly/calibration and at scheduled maintenance intervals. Not only does the use of dedicated equipment and trained operators increase cost and complexity, but it also means that runout may go undetected and therefore uncorrected in the field, potentially causing device damage and/or unsatisfactory device operation.

## Summary

The present inventors have recognized, among other things, that there a desire to develop a more straightforward and efficient way to detect runout of a rotating mechanical component.

In a first aspect of the present disclosure, there is provided a system for detecting runout of a rotating mechanical component, the system being configured to: receive a first angular position signal from a first magnetic angular position sensor arranged for use in determining an angular position of the rotating mechanical component; and detect runout of the rotating mechanical component using the first angular position signal.

In a second aspect of the present disclosure, there is provided a method for detecting runout of a rotating mechanical component, the method comprising: receiving a first angular position signal from a first magnetic angular position sensor arranged for use in determining an angular position of the rotating mechanical component; and detecting runout of the rotating mechanical component using the first angular position signal.

In a third aspect of the present disclosure, there is provided a computer program comprising instructions configured, when executed, to cause at least one processor of an electronic device to: detect runout of a rotating mechanical component using a first angular position signal generated by a first magnetic angular position sensor that is arranged for use in determining an angular position of the rotating mechanical component.

## Drawings

Aspects of the disclosure are described, by way of example only, with reference to the following drawings:

Figure 1 shows a representation of an example of an AMR angular position sensor;
Figure 2 shows schematic diagram of example of signal processing performed by an angular position determination system;
Figure 3 shows representation of two example of angular position signals generated by the AMR angular position sensor of Figure 1 when there is no runout;

Figure 4 shows a representation of an example of displacement of a rotating mechanical component when there is runout;

Figure 5 shows a representation of two examples of angular position signals generated by the AMR angular position sensor of Figure 1 when there is runout;

Figure 6 shows a representation of an example of a system for detecting runout, in accordance with an aspect of the present disclosure;

Figure 7A shows a representation of the amplitude modulation of one of the angular position signals of Figure 5;

Figure 7B shows a representation of an example of a technique for determining the amplitude modulation of the one of the angular position signals of Figure 5;

Figure 8 shows example of details of the runout detector of Figure 6;

Figure 9A shows a representation of example of process steps for generating a reference runout signal during calibration;

Figure 9B shows a representation of example of process steps for generating a runout signal;

Figure 10 shows a representation of an example of a system for detecting runout, in accordance with a further aspect of the present disclosure;

Figure 11 shows representation of an example of a system for detecting runout, in accordance with a further aspect of the present disclosure;

Figure 12 shows a representation of examples of errors in the measurement of rotational angle caused by runout;

Figure 13 shows representation of examples of process steps that may be performed by the corrector of Figure 11;

Figure 14 shows a representation of example pf errors in the corrected angular measurement signal of Figure 11;

Figure 15 shows a representation of an example of a system for detecting runout, in accordance with a further aspect of the present disclosure;

Figure 16 shows a representation of examples of sensor elements that make up the AMR sensor of the angular position sensor of Figure 1;

Figures 17A to 17C shows a representation of example of target gear displacement when there is runout;

Figure 18 shows a representation of two examples of angular position signals generated by the AMR angular position sensor of Figures 17A to 17C; and

Figure 19 shows a representation of an example of a runout signal generated using the two angular position signals of Figure 18.

## Detailed Description

Often, rotating mechanical components (also referred to through this document as "rotating mechanical shafts") include an angular position sensor for use in determining angular position (for example, the rotational position of the rotating mechanical component around its primary axis, such as number of degrees rotated clockwise or anticlockwise from a reference orientation). One category of angular position sensors is magnetic angular position sensors. These include one or more magnetic components to establish a magnetic field (such as a fixed position magnet, or a gear/disc on the rotating mechanical component that has a plurality of magnetic poles - a pole ring), one or more fixed position magnetic field sensor elements and one or more rotating elements that are suitable for attaching to a rotating mechanical component (for a pole ring implementation, the magnetic components/poles are on the rotating mechanical component). The rotating element is arranged such that as the mechanical component rotates, the magnetic field sensed by the fixed position magnetic field sensor elements is changed by the rotation of the rotating element. These changes in the sensed magnetic field can be used to determine the angular position of the rotating mechanical component.

The inventors have realised that such magnetic angular position sensors may also be used to detect runout of the rotating mechanical component. In particular, they have recognised that runout of the rotating mechanical component affects the signal(s) that are output from the magnetic angular position sensor. For example, the amplitude of the sensor signal may be modulated, and the magnitude of the modulation may be indicative of the magnitude of runout, and the phase of the modulation may be indicative of the phase of the runout. As a result, the inventors have developed techniques for analysing the signal(s) output from a magnetic angular position sensor in order to detect runout. This means that runout detection may be achieved without requiring any new sensing hardware and may even be retro-enabled for existing mechanical devices that have a magnetic angular position sensor (for example, by virtue of a software or firmware update to an angular position determination unit/system, or by virtue of fitting an additional or replacement electronic system configured to detect runout using the angular position signal(s) from the magnetic angular position sensor). Furthermore, runout detection in-the-field (i.e., during normal operation of the mechanical device) may be achieved, meaning that changes in runout may be detected much more quickly compared with performing runout checks at regular servicing intervals. This may help to improve device health and reduce the potential for device damage. Furthermore, it means that runout can be detected without the cost and that is associated with dedicated runout detection equipment.

Detection of runout may be performed intermittently or continuously, for example continuously performing any of the techniques described below. If any values indicative of runout, for example the runout values making up the runout signal described below, are stored in memory, they may optionally by updated each time runout detection is performed. The same is true for any other signals/values that are generated and stored, for example the correction values making up the correction signal. In this way, runout may be accurately monitored over time, and any processes or operations that are performed based on signals/values indicative of runout may be based on the most recent detection of runout.

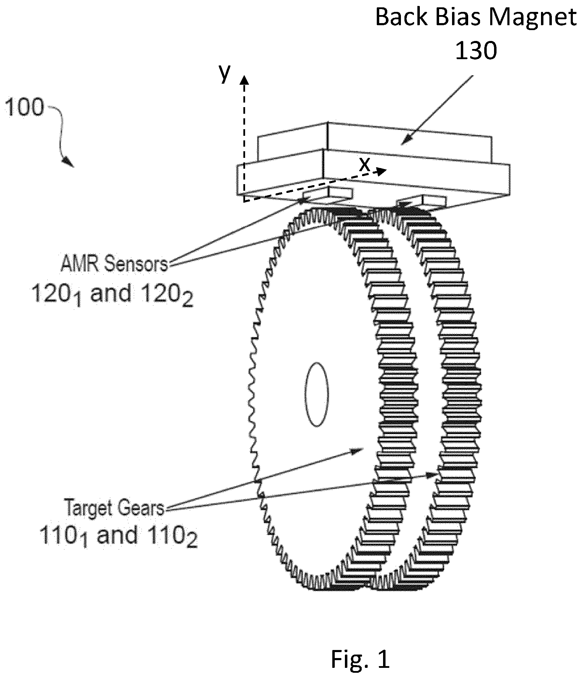

Figure 1 shows an example representation of a particular type of magnetic angular position sensor 100, which comprises two target gears $110_1$ and $110_2$, two respective anisotropic magnetoresistive (AMR) sensors $120_1$ and $120_2$, and a back bias magnet 130. The two target gears $110_1$ and $110_2$ are configured to be mounted on the rotating mechanical component such that as the mechanical component rotates, the two target gears $110_1$ and $110_2$ rotate. In this example, the two target gears $110_1$ and $110_2$ each have teeth made from a permeable material such as iron which affects the magnetic field established by the back bias magnet 130 and sensed by the AMR sensors $120_1$ and $120_2$. In an alternative, rather than having a back bias magnet 130, the teeth of each gear $110_1$ and $110_2$ may be constructed to form magnetic pole pairs that move past the stationary AMR sensors $120_1$ and $120_2$ as the gears rotate, thereby changing the magnetic field sensed by the AMR sensors $120_1$ and $120_2$.

As explained later, one of the gears $110_1$ has N teeth (such as 32 teeth) and the other gear $110_2$ has N-1 teeth (such as 31 teeth). Each AMR sensor $120_1$ and $120_2$ has at least one AMR element, the resistance of which changes from its normal value in a way that depends on the square of the cosine of the angle between the magnetic field and the direction of current flow in the resistor. Therefore, as a target gear rotates and the teeth of the gear alter the magnetic field at the AMR sensor, the resistance of the at least one AMR element is altered.

Typically, each AMR sensor $120_1$ and $120_2$ includes more than one such element, for example comprising a plurality of AMR elements arranged as a Wheatstone Bridge with a differential output. Changes in the resistance of the AMR elements causes corresponding changes in the differential output of the Wheatstone Bridge, which means that rotation of the mechanical component (and therefore target gears $110_1$ and $110_2$) can be detected in the differential output. Also, often a second Wheatstone Bridge of AMR elements forms part of each AMR sensor $120_1$ and $120_2$, with the second bridge being in close proximity to the first bridge, but at a 45 degree relative orientation. This results in one bridge providing a cosine signal at its differential output and the other providing a sine signal at its differential output (i.e., the two sensors signals output respectively from the two bridges are notionally quadrature signals). Using these two sensor signals can make it more convenient to calculate the angular position of the rotating mechanical component, for example using a Cordic algorithm or a tracking phase locked loop (PLL).

Example x and y axis directions are represented in Figure 1, showing the orientations of the axes that are referred to later in this disclosure. As can be seen, both the x and y axes are normal to the rotational axis of the shaft, with the y axis being in the direction of the gap between the AMR sensors $120_1$, $120_2$ and the target gears $110_1$, $110_2$, and the x-axis being normal to both the y-axis and the shaft rotational axis.

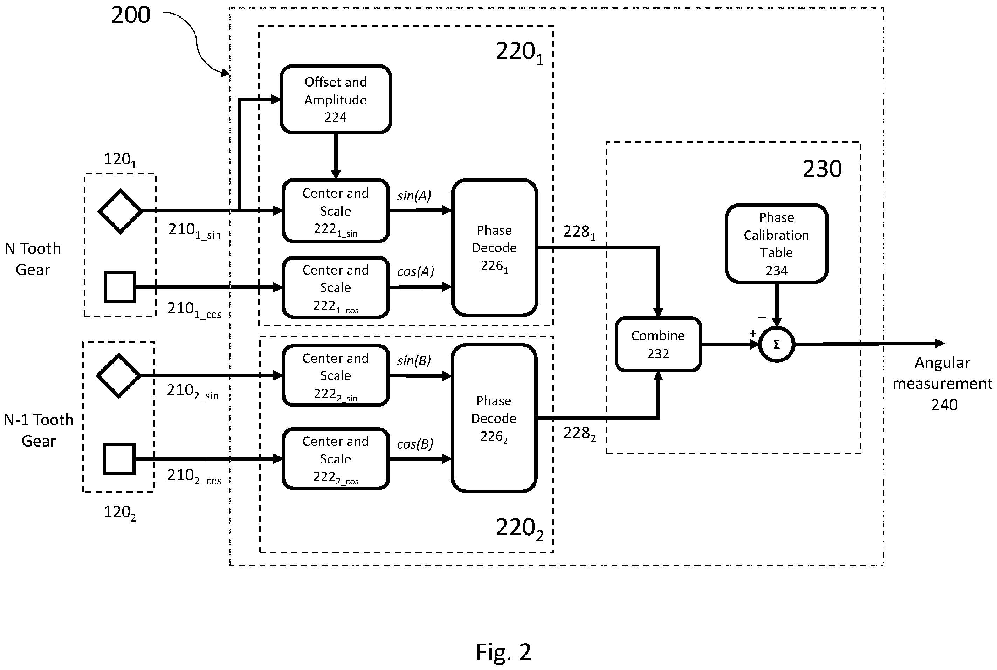

Figure 2 shows an example schematic diagram of the signal processing performed by an angular position determination system 200. The system 200 includes various functions/units (which may also be referred to as algorithms), each configured to perform a particular signal processing or calculation functions. It should be appreciated that the separation of each function/unit is merely to assist with a clear explanation of the overall operation of the system 200, and the detailed functionality of the system may be arranged or grouped in any other suitable way.

The system 200 is configured to be coupled to the magnetic angular position sensor 100 so as to receive four angular position signals: a first angular position signal $210_{1\_sin}$ from the AMR sensor $120_1$ associated with the N tooth gear $110_1$; a second angular position signal $210_{1\_cos}$ from the AMR sensor $120_1$ associated with the N tooth gear $110_1$, which is notionally quadrature with respect to the first angular position signal $210_{1\_sin}$; a third angular position signal $210_{2\_sin}$ from the AMR sensor $120_2$ associated with the N-1 tooth gear $110_2$; and a fourth angular position signal $210_{2\_cos}$ from the AMR sensor $120_2$ associated with the N-1 tooth target gear $110_2$, which is notionally quadrature with respect to the third angular position signal $210_{2\_sin}$. Optionally, the sensor signals may be amplified and/or converted from analog to digital prior to being received by the angular position determination system 200.

The term "notionally quadrature" is used to describe two signals that are intended to be quadrature signals (in other words, signals that are 90° out of phase with each other, or orthogonal to each other), but in practice may not be exactly quadrature owing to mechanical misalignment of components and/or different phase lags on signal paths. As a result, notionally quadrature signals may in practice be between 45° to 135° out of phase with each other, or more preferably between 60° to 120° out of phase with each other, or more preferably between 75° to 105° out of phase with each other, or more preferably between 80° to 100° out of phase with each other.

A first gear phase function/unit $220_1$ is configured to use the first angular position signal $210_{1\_sin}$ and the second angular position signal $210_{1\_cos}$ in order to determine a first tooth phase signal $228_1$. For this purpose, the first gear phase function/unit $220_1$ may comprise two center and scale units/algorithms $222_{1\_sin}$ and $222_{1\_cos}$, two offset and amplitude unit/algorithms 224 (although only one is represented for the sake of simplicity) and a phase decode $226_1$ unit/algorithm, the operation of all of which will be well understood by the skilled person. For example, the sine and cosine signals from each AMR sensor may vary in offset and/or amplitude due to mechanical effects or temperature changes, which may be corrected by the center and scale functions/units $222_{1\_sin}$ and $222_{1\_cos}$ and the offset and amplitude functions/units 224. Whilst only a single offset and amplitude function/unit 224 is represented, it will be appreciated that another offset and amplitude function/unit 224 may be used to act on the second angular position signal $210_{1\_cos}$ and interact with the center and scale function/unit $222_{1\_cos}$. In a further example, the phase decode $226_1$ function/unit may use a Cordic algorithm or PLL tracking loop in order to generate the first tooth phase signal $228_1$.

The second gear phase function/unit $220_2$ may be configured in the same way as the first $220_1$ (offset and amplitude functions/units 224 are not represented for the second gear phase system/unit $220_2$ merely for the sake of simplicity) in order to generate a second tooth phase signal $228_2$ using the third angular position signal $210_{2\_sin}$ and the fourth angular position signal $210_{2\_cos}$.

As will be well understood by the skilled person, because one of the gears has N teeth and the other has N-1 teeth, according to the Vernier (or Nonius) principle, the first tooth phase signal $228_1$ and second tooth phase signal $228_2$ should be the same only once per full rotation of the mechanical component. Each combination of values for the first tooth phase signal $228_1$ and second tooth phase signal $228_2$ uniquely describes the rotational position of the rotating mechanical component and, as a result, the Vernier system/unit 230 can combine 232 the two signals to generate an initial angular measurement. In some cases the initial angular measurement signal may include some resultant phase error, in which case, optionally, a phase calibration table 234 may be used to correct resultant phase errors and generate an angular measurement signal 240 that is indicative of the measured angular position of the rotating mechanical component.

Whilst Figure 2 shows one particular implementation of the signal processing that may be used to generate an angular measurement signal 240 using the four sensor signals, it will be appreciated that this is a non-limiting example and that other techniques may alternatively be used. For example, in one alternative implementation, only angular position sensor $100_1$ may be used and the determined tooth phase signal $228_1$ may be resolved to an angular measurement signal 240 using a further signal received from a giant magnetoresistor (GMR) multiturn sensor mounted on the rotating mechanical component.

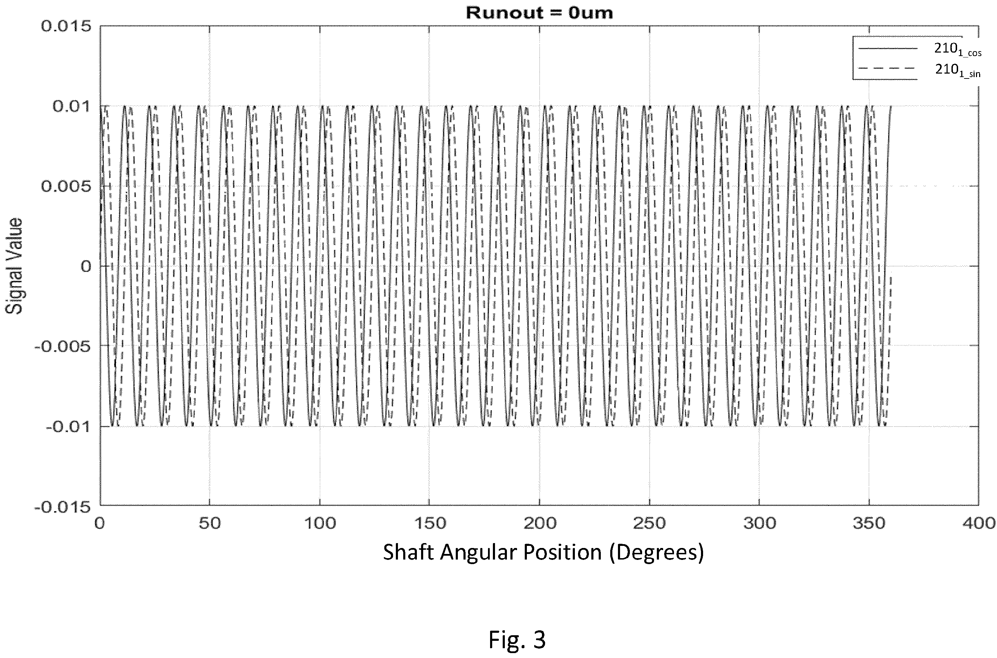

Figure 3 shows an example representation of the first angular position signal $210_{1\_sin}$ and the second angular position signal $210_{1\_cos}$. In this example, the target gear $110_1$ has 32 teeth. As a tooth approaches the AMR sensor $120_1$, the angular position signal increases, and as the tooth moves away from the AMR sensor $120_1$, the angular position signal decreases. Since there are 32 teeth, the first angular position signal $210_{1\_sin}$ and the second angular position signal $210_{1\_cos}$ each have 32 periods of oscillation for each full rotation of the rotating mechanical component. In this example, the two signals are exactly quadrature, or orthogonal, although it should be appreciated that they are notionally quadrature signals so may in practice not be exactly orthogonal.

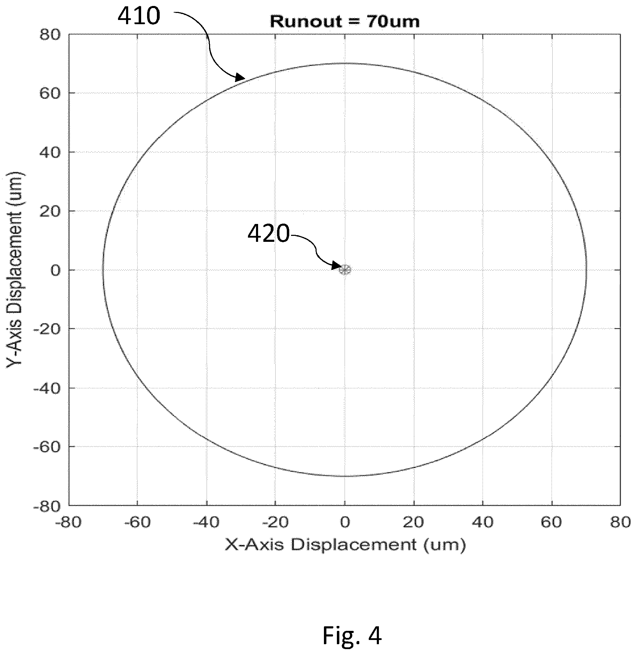

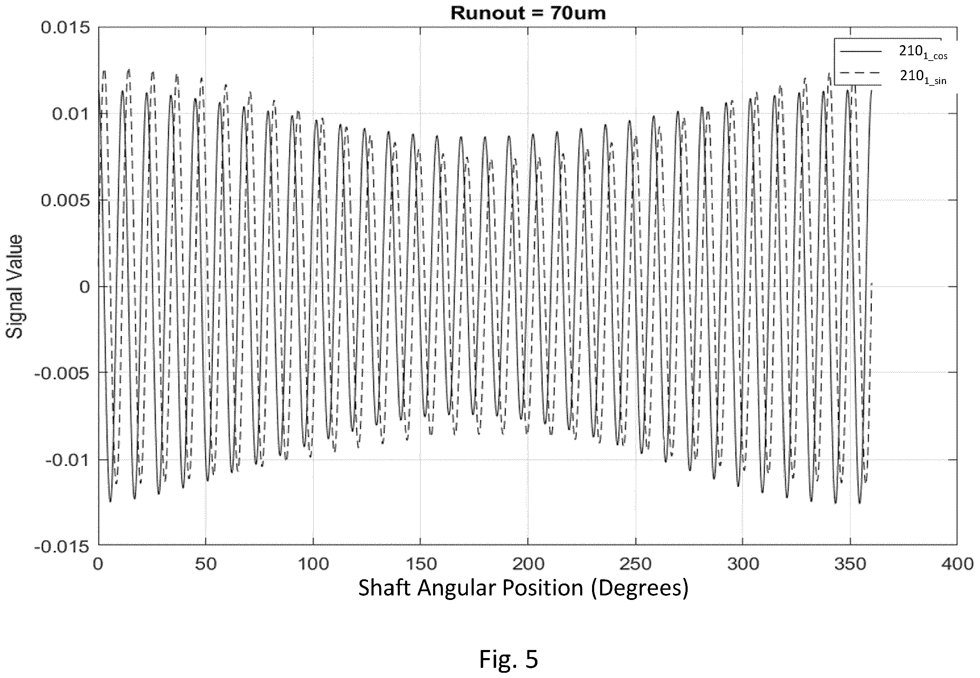

The inventors have recognised that when there is runout on the rotating mechanical component, the first angular position signal $210_{1\_sin}$ and the second angular position signal $210_{1\_cos}$ will be affected because the proximity of the target gear $110_1$ to the AMR sensor $120_1$ is no longer uniform throughout the full rotation of the mechanical component. In more detail, at one particular rotational position of the mechanical component, the distance between the target gear $110_1$ and the AMR sensor $120_1$ will be at its smallest, and at a rotational position of the mechanical component about 180° from that, the distance between the target gear $110_1$ and the AMR sensor $120_1$ will be at its largest. This will have an effect on the amplitudes of first angular position signal $210_{1\_sin}$ and the second angular position signal $210_{1\_cos}$. This may be appreciated from Figures 4 and 5.

Figure 4 shows a representation of the displacement 410 of the shaft centre of the mechanical component relative to its axis of rotation 420 as the mechanical device completes a full rotation. The figure visualises the position of the displacement 410 from a perspective looking into the axis of rotation 420 of the mechanical component. In this example, the mechanical device has a runout of $70\mu m$.

Figure 5 shows an example representation of the first angular position signal $210_{1\_sin}$ and the second angular position signal $210_{1\_cos}$ for the runout represented in Figure 4. The inventors have realised that the offset and/or the amplitude of the first angular position signal $210_{1\_sin}$ and the second angular position signal $210_{1\_cos}$ vary as the mechanical component rotates. This is because the position and orientation of the teeth of the target gear $110_1$ relative to the AMR sensor $120_1$ are altered by the runout.

In this example, at an angular position of 0° of the rotating mechanical device, the shaft centre is at its closest position to the AMR sensor $120_1$ (for example, a displacement 410 in Figure 4 of x=0cm and y=$70\mu m$). As the mechanical device rotates and the x, y position of the displacement moves, the shaft centre moves away from the AMR sensor $120_1$ until at an angular position of 180° the shaft centre of the mechanical component is at its furthest position from the AMR sensor $120_1$ (for example, a displacement 410 in Figure 4 of x=0cm and y=$-70\mu m$). The inventors have recognised that this causes the modulation of the amplitude of the first angular position signal $210_{1\_sin}$ and the second angular position signal $210_{1\_cos}$, which may be used to detect runout.

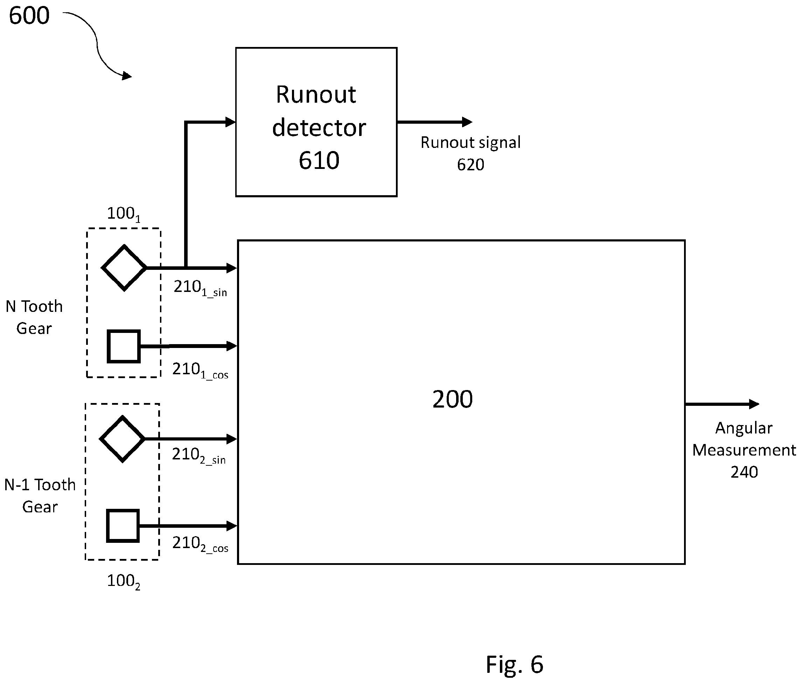

Figure 6 shows an example system 600 in accordance with an aspect of the present disclosure. In this example, the system 600 comprises the angular position determination system 200 described earlier, as well as a runout detector 610. As explained earlier, the features of the angular position determination system 200 described above are merely one example implementation of how angular position signals output from one or more magnetic angular position sensors 100 may be used. The runout detection aspects developed by the inventors and described with reference to Figure 6 and all subsequent Figures are not dependent on any of the specific features of the angular position determination system 200. Indeed, for a number of the aspects of this disclosure, for example those of Figures 6 to 10, an angular position determination signal 200 is not even required (for example, in some implementations the system 600 may include only the runout related features, such as the runout detector, such that the angular position sensor(s) 100 is used for nothing other than runout detector).

The runout detector 610 is configured to receive the first angular position signal $210_{1\_sin}$ (and optionally also the second angular position signal $210_{1\_cos}$) and use it to detect runout. The first angular position signal $210_{1\_sin}$ may optionally also be used for any other purpose, for example for the determination of the angular position of the rotating mechanical component. Optionally, the runout detector 610 may alternatively receive the output of the offset and amplitude function/unit 224, or may itself include the functionality of the offset and/or amplitude function/unit 224).

In this example, the runout detector 610 is configured to make use of just one angular position signal - the first angular position signal $210_{1\_sin}$. However, it may equally use any one of the other angular position signals $210_{1\_cos}$, $210_{2\_sin}$, $210_{2\_sin}$ and operate in the same way as described below.

The runout detector 610 is configured to determine a runout signal 620 that describes the runout of the rotating mechanical component (eg, it is indicative of the runout of the rotating mechanical component at a plurality of different angular positions of the component). The runout signal 620 may take a number of different forms, for example it may be made up of a plurality of runout values, each indicative of the amount of runout in a particular direction, for example the y-axis direction in Figure 4, at a respective plurality of different angular positions of the rotating mechanical component. It may alternatively be a continuous signal whose value is the size of runout in a particular direction, for example the y-axis direction in Figure 4, which changes as the mechanical component rotates.

In this example, determination of the runout signal 620 comprises determining a first amplitude modulation signal using the first angular position signal $210_{1\_sin}$, the first amplitude modulation signal being indicative of the amplitude modulation of the first angular position signal $210_{1\_sin}$.

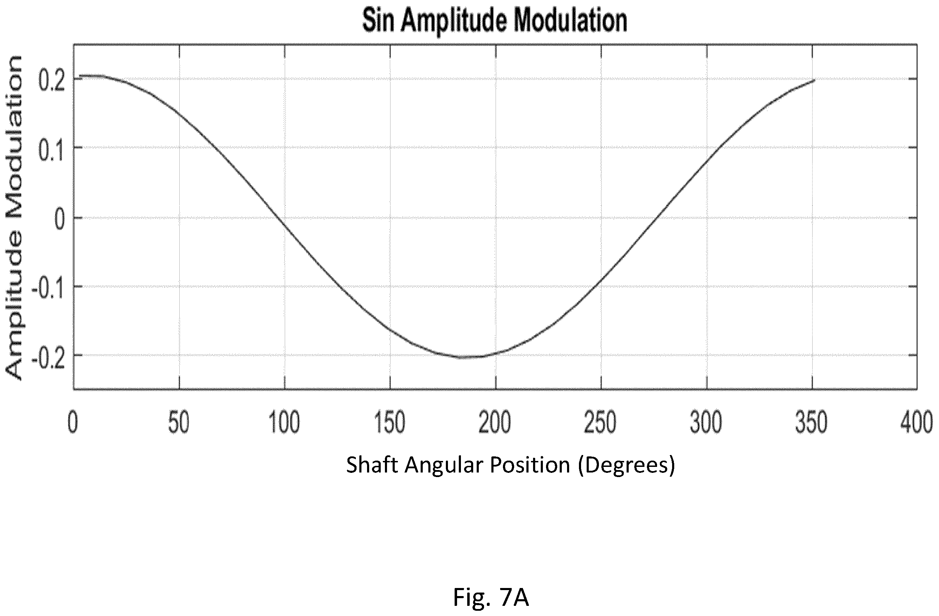

Figure 7A shows a representation of an example first amplitude modulation signal, which shows the amplitude modulation of the first angular position signal $210_{1\_sin}$. In this example, the runout signal 620 may be the first amplitude modulation signal. The amplitude modulation of the first angular position signal $210_{1\_sin}$ may be determined by the runout detector 610 in any suitable way.

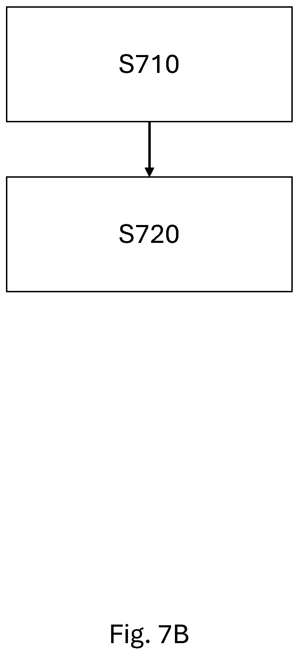

Figure 7B shows a representation of one example technique for determining the amplitude modulation of the first angular position signal $210_{1\_sin}$. In Step S710, the local amplitude may be determined multiple times across the shaft rotation (for example, to determine the local amplitude at a variety of different shaft angular positions). The local amplitude may be repeatedly determined, or sampled, any number of times per shaft rotation (i.e., any suitable sampling rate may be used), for example twice, six times, 10 times, 20 times, 32 times, 40 times, 50 times, etc, per rotation, depending on the desired resolution of amplitude modulation determination. The local amplitude may be, for example, the peak to peak amplitude of the $210_{1\_sin}$ signal at a particular shaft angular position. In this case, the local amplitude may be found by:

$$Local\_amplitude = max\_local - 0.5*min\_left - 0.5*min\_right$$

Where:

max_local = the local maximum of the first angular position signal $210_{1\_sin}$ min_left = the local minimum to the left of the local maximum of the first angular position signal $210_{1\_sin}$
min_right = the local minimum to the right of the local maximum of the first angular position signal $210_{1\_sin}$

By repeatedly finding the local amplitude at different angular positions of the shaft, a signal indicative of the amplitude modulation of the first angular position signal $210_{1\_sin}$ may be formed. For example, the local amplitude may be determined at a plurality of different shaft angles, such as at equally-spaced shaft angles, (eg, 0°, 11.25°, 22.5°, etc) or non-equally-spaced shaft angles, such as at randomly or semi-randomly spaced shaft angles (for example, the local amplitude may be determined at 30, 40, 50, etc positions, with the particular shaft angle for each being recorded along with the determined value local_amplitude). Optionally, it may be desirable to normalise that signal, since the average amplitude of the signal may change over time. Therefore, optionally Step S720 may be performed, where the signal is normalised.

In step S720, the average amplitude (average_amplitude) of the signal is determined as the mean of the local amplitude values. The amplitude modulation signal may then be determined by:

Amplitude_modulation = Local_amplitude/average_amplitude -1

for each determined Local_amplitude value that has been determined across a range of shaft angles.

An example of the resultant amplitude modulation signal is represented in Figure 7A. The -1 term results in the signal varying around 0, as shown in Figure 7A. However, the -1 term may be omitted, in which case the amplitude modulation signal would vary about 1.

Optionally, the determined values that make up the first amplitude modulation signal may be stored in memory, for example in volatile or non-volatile digital storage, such as RAM, flash memory, a hard disk drive, etc. The memory may be part of the runout detector 610, or may be accessible to the runout detector 610 and optionally shared by one or more other functions/units of the system 600 and/or by other related or unrelated systems. Optionally, each value may be stored in association with a rotational angle 240 value (for example in a database or look-up table), so that the angular position of the shaft for each value of the first amplitude modulation signal is stored. However, if the local_amplitude values described above have each been determined for specific shaft angles (eg, 0°, 10°, 20°, etc), then also storing the angle may not be necessary.

In some example implementations, the runout signal 620 may comprise the first amplitude modulation signal. Optionally, the runout signal 620 may be output from the system 600 (in combination with the rotational angle 240), for example for use by other systems, such as for displaying to an operator of the rotating mechanical component (which may be useful, for example, during calibration of the mechanical device, so that runout can be understood and reduced/eliminated by making mechanical changes to the device). In other examples, the runout signal 620 may not be output from the system 600, but may instead be used for further processes within the system 600, as explained later.

The larger the amplitude modulation, the more runout is occurring for the rotating mechanical component. In some situations it is helpful to know the absolute amount of runout taking place, which can be seen from the amplitude modulation signal. However, in other situations there may already have been some amount of runout when the device was first manufactured or most recently calibrated and it is more helpful to know how much runout has changed since then.

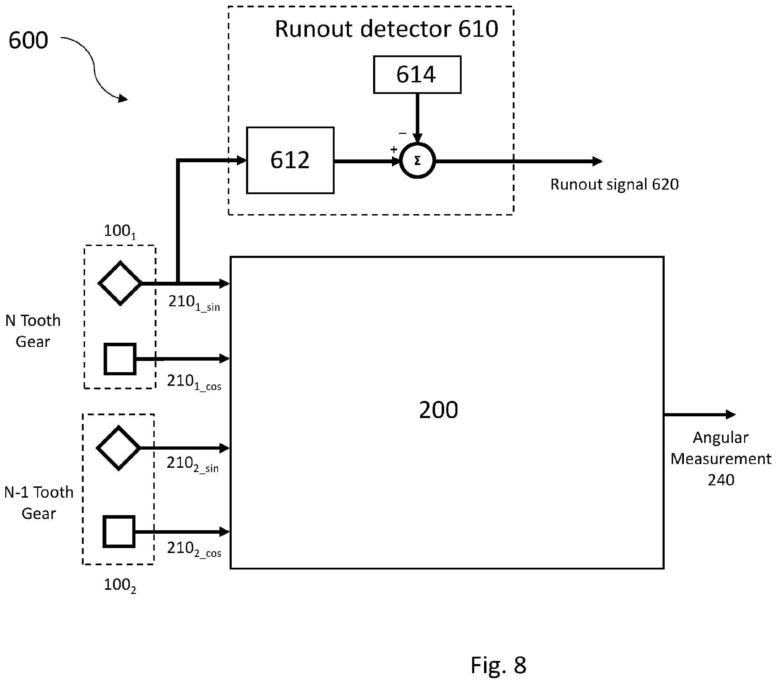

Figure 8 shows example details of a particular implementation of the system 600 where the runout signal 620 is indicative of a change in runout compared with a reference runout signal. The reference runout signal may be indicative of a measurement of runout of the rotating mechanical component when the mechanical device was first made, or when it was most recently calibrated. In this example, the runout detector 610 comprises an amplitude modulation determination unit/function 612, configured to determine a first amplitude modulation signal using the first angular position signal $210_{1\_sin}$, and a reference unit/function 614, configured to store a reference runout signal. The first amplitude modulation signal may be determined as described above.

The runout detector 610 is configured to determine the difference between the reference runout signal and the first amplitude modulation signal, for example by subtracting one from the other, in order to generate the runout signal 620. In this way, changes in mechanical runout since the most recent calibration are reflected in the runout signal 620. Consequently, if, for example, the first amplitude modulation signal has a maximum value of +a at a shaft position of 90 ° and a minimum value of -a at a shaft position of 270°, that might be considered to be acceptable. However, if at the time of calibration there was a runout of -a at a shaft position of 90° and a runout of +a at a shaft position of 270°, runout has actually changed by 2a since calibration. Runout changing by this amount may be of concern, for example indicating that a bearing might be significantly worn or be broken, or causing balance problems for the mechanical device as a whole if it has been balanced to work well with the runout at calibration.

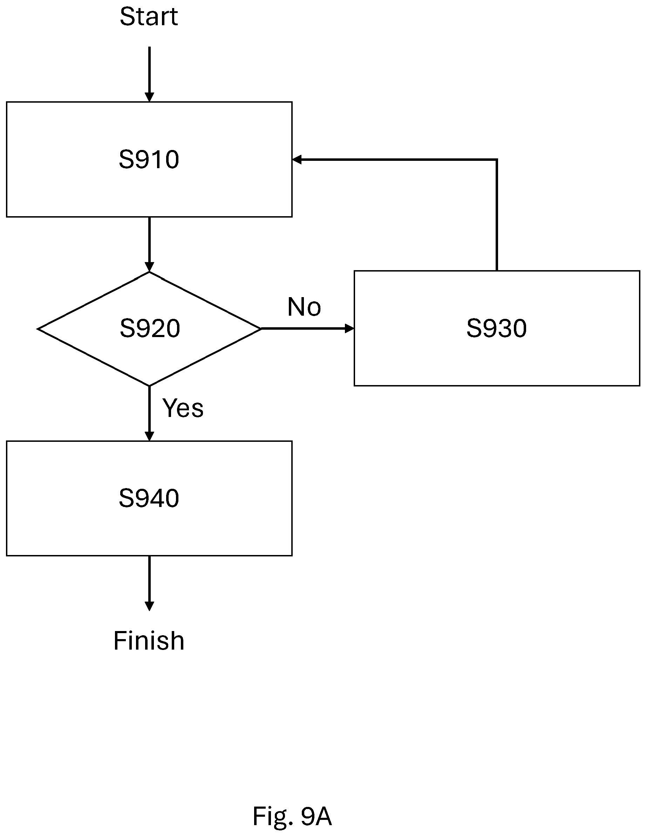

Figure 9A shows example process steps for generating the reference runout signal during calibration. In Step S910, the runout detector 610 determines the runout signal 620 by determining the first amplitude modulation signal, as explained above. At this stage, the reference runout signal may be set to 0 (for example, if there was an earlier reference runout signal and a new calibration is now being performed, the previous reference signal may be deleted and set in memory to 0). Consequently, the runout signal 620 is a measure of the absolute runout of the mechanical component.

In Step S920, it is determined whether the amount of runout is acceptable. This may be performed by an operator, for example by looking at a display of the runout signal 620, or based solely on the amplitude of the runout signal 620 (for example, the peak-to-peak amplitude, or just the peak amplitude, or the RMS, etc). If the amount of runout is not acceptable (eg, if runout is too large), in Step S930 they may make mechanical adjustments and then restart the calibration process in Step S910. When it is determined that the amount of runout is acceptable, the operator may indicate this to the runout detector 600, for example with an input to a user interface, such as by pressing a button, and the process proceeds to Step S940.

In Step S940, the most recently determined runout signal 620 is stored by the reference unit/function 614 as the reference runout signal. Similarly to storage of the runout signal 620 described earlier, the values that make up the reference runout signal 620 may be stored in memory, for example in volatile or non-volatile digital storage, such as RAM, flash memory, a hard disk drive, etc. The memory may be part of the runout detector 610, or may be accessible to the runout detector 610 and optionally shared by one or more other functions/units of the system 600 and/or by other related or unrelated systems.

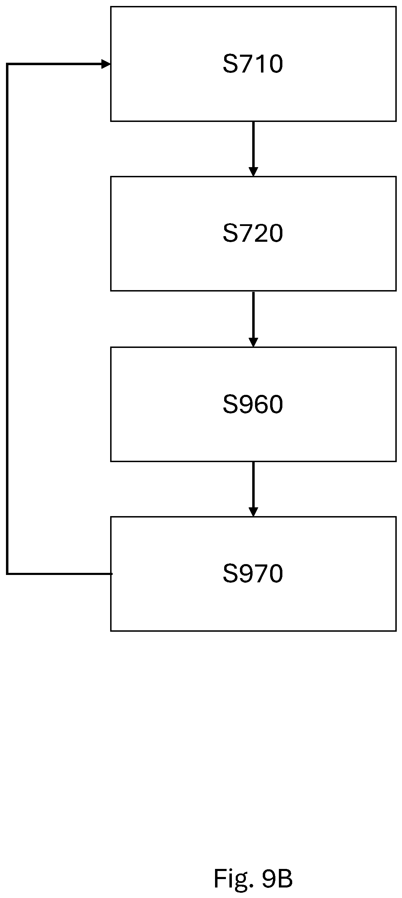

Figure 9B shows example process steps for generating a runout signal 620 using a stored reference runout signal, where the runout signal 620 is indicative of a change in runout compared with the reference runout signal.

In Step S710, and optional Step S720, the first amplitude modulation signal is determined by the amplitude modulation determination unit/function 612, as explained earlier.

In Step S960, for each value of the first amplitude modulation signal, a reference value is determined using the stored reference runout signal. In the situation where the values of the first amplitude modulation each correspond to specific, predetermined shaft angles (such as, 0°, 15°, 30°, etc), there will also be a stored reference value for each angle. However, if the values making up the first amplitude modulation signal and/or the reference runout signal do not correspond to predetermined shaft angles, interpolation and/or extrapolation may be used, for example interpolating between two stored reference values corresponding to angles that are either side of the shaft angle corresponding to the amplitude modulation value.

In Step S970, the difference between the amplitude modulation values and the corresponding reference values is determined, which together form a runout change signal that is indicative of the change in runout since the most recent device calibration. The runout signal 620 may be, or may comprise, the runout change signal. The values making up the runout change signal may be stored.

Optionally, regardless of how the runout signal 620 is determined and whether it comprises the first amplitude modulation signal (indicating absolute runout) or the runout change signal (indicating change in runout compared with the reference signal), the system 600 (for example the runout detector 610, or any other suitable function/unit of the system 600) may be configured to determine a maximum runout value that is indicative of a maximum magnitude of runout of the rotating mechanical component. For example, it may identify the largest value of the runout signal (which may be the maximum or the minimum). This may be done, for example, by identifying the signal value with the largest magnitude, which may be sufficiently accurate if the first amplitude modulation values have sampled the runout with sufficient frequency. Alternatively, any suitable extrapolation and/or interpolation techniques may be used to identify the maximum and/or minimum of the runout signal from the values that make up the runout signal, such as curve fitting.

The determined maximum runout value may be output from the system 600, for example for display to an operator or for use by another function/unit. Additionally, or alternatively, the system 600 (for example the runout detector 610, or any other suitable function/unit of the system 600) may be configured to compare the maximum runout value against a runout threshold. The runout threshold may be a predetermined value, which may be set depending on the nature and operational requirements of the mechanical device. If the maximum runout value exceeds the runout threshold, the system 600 may be configured to perform a predetermined action, such as causing rotation of the mechanical component to cease (for example, by issuing a shut down command to a controller of the mechanical device) and/or outputting a notification that the runout threshold has been exceeded (which may, for example, cause a visual and/or audio alert for an operator, and/or be recorded in a system log). Optionally, the maximum runout value may be compared against one or more further runout thresholds, so that, for example, different predetermined actions may be performed depending on the severity of runout (such as merely logging a notification in memory if only the smallest threshold is exceeded, and causing rotation of the mechanical component to cease if the largest threshold is exceeded).

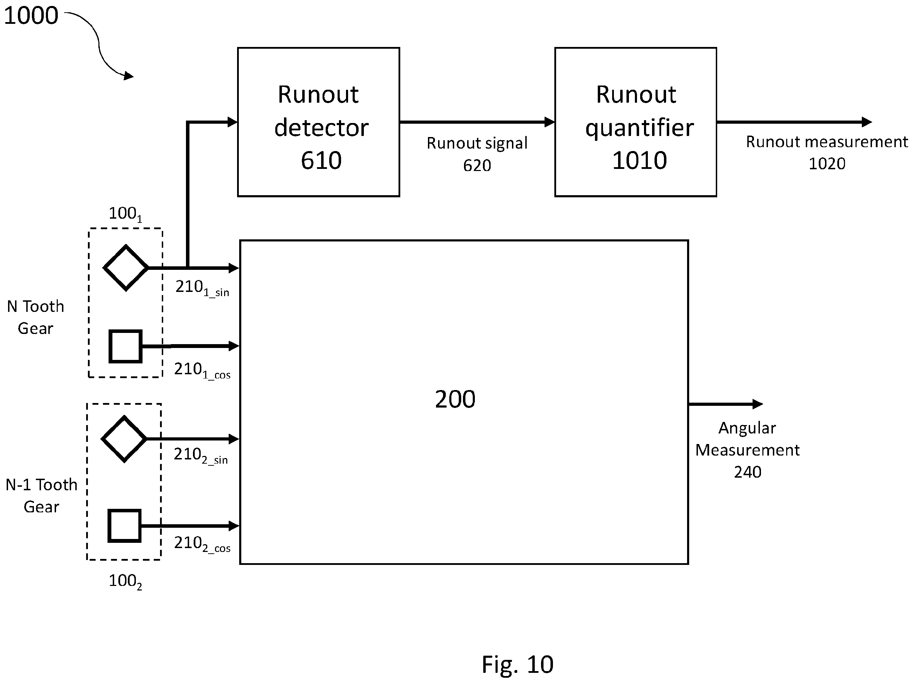

Figure 10 shows a further example system 1000 in accordance with an aspect of the present disclosure. This example is very similar to system 600, but further includes a runout quantifier 1010. The runout quantifier 1010 may be configured to determine the maximum runout value, in the same way as explained above. The runout quantifier 1010 may either receive each value making up runout signal from the runout detector 610 as it is determined (and optionally store the values in memory), or may access the memory where the runout detector 610 has stored them. The runout quantifier 1010 may then convert the maximum runout value into a measurement of runout 1020, for example in units of $\mu$m, or mm, or m. The maximum runout value may be converted to a measurement of runout by multiplying the maximum runout value by a predetermined conversion value (and optionally all values making up the runout signal 620 may be converted into measurement values using the conversion value). The predetermined conversion value may, for example, be set for all mechanical devices and/or angular position sensors 100 of the same type, or on a device by device basis. It may be determined in a laboratory by applying a known amount of runout to the rotating mechanical component and then observing the resultant runout signal 620 and/or maximum runout value. In one example, it may be determined in a laboratory for an angular position sensor 100 with a particular distance between the target gear $110_1$ and the AMR sensor $120_1$. A relationship between the conversion value and the distance between the target gear $110_1$ and the AMR sensor $120_1$ may be experimentally determined so that a conversion value for each angular position sensor 100 may be set simply by measuring the distance between the target gear $110_1$ and the AMR sensor $120_1$. For example, it may be determined that the conversion value is a particular value for a particular distance between the target gear $110_1$ and the AMR sensor $120_1$, and change by a particular % amount for every x $\mu$m of change in distance between the target gear $110_1$ and the AMR sensor $120_1$ (for example, that it changes by 15% for every 50$\mu$m change from the particular distance between the target gear $110_1$ and the AMR sensor $120_1$).

The system 1000 may be configured to output the measurement of runout 1020 so that it may be used by one or more other functions/units of the system 1000 (or any other system) and/or communicated to an operator of the mechanical device. In this way, during operation of the mechanical device in the field, runout may be continuously or intermittently measured. The system 1000 may optionally output any one or more other signals, such as the runout signal 620 and/or an outcome of the comparison of the maximum runout value against the runout threshold, as described above.

Whilst in this example the runout quantifier 1010 determines the maximum runout value, in an alternative the runout detector 610 may determine it and communicate it to the runout quantifier 1010.

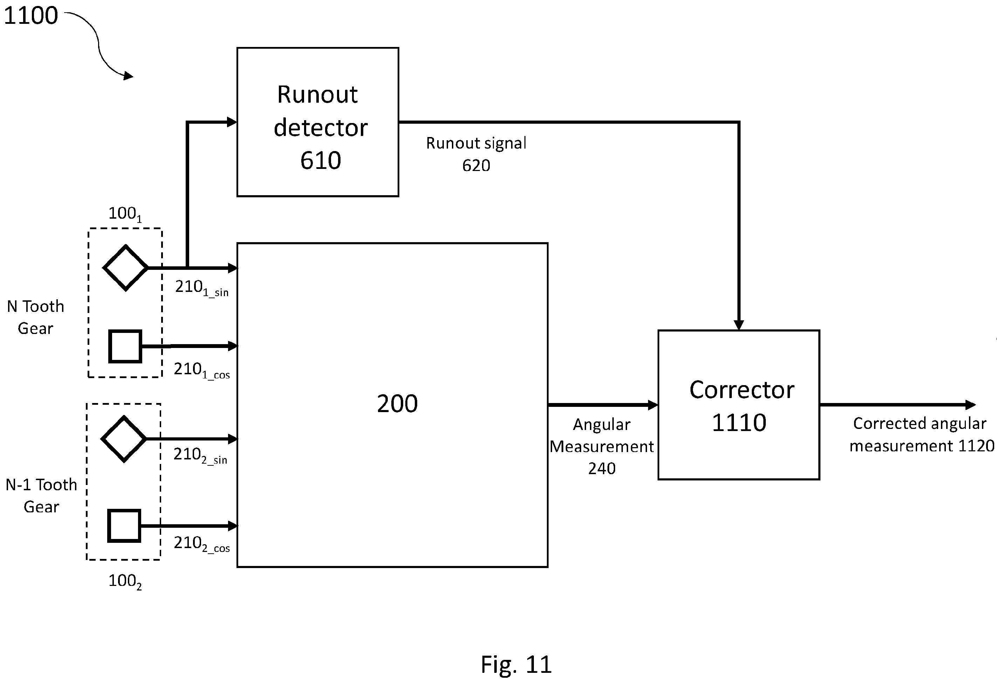

Figure 11 shows a further example system 1100 in accordance with an aspect of the present disclosure. This example is very similar to system 600, but further includes a corrector 1110. The inventors have realised that runout of the rotating mechanical component causes errors in the angular measurement 240 and the corrector 1110 is configured to correct, or at least reduce, those errors.

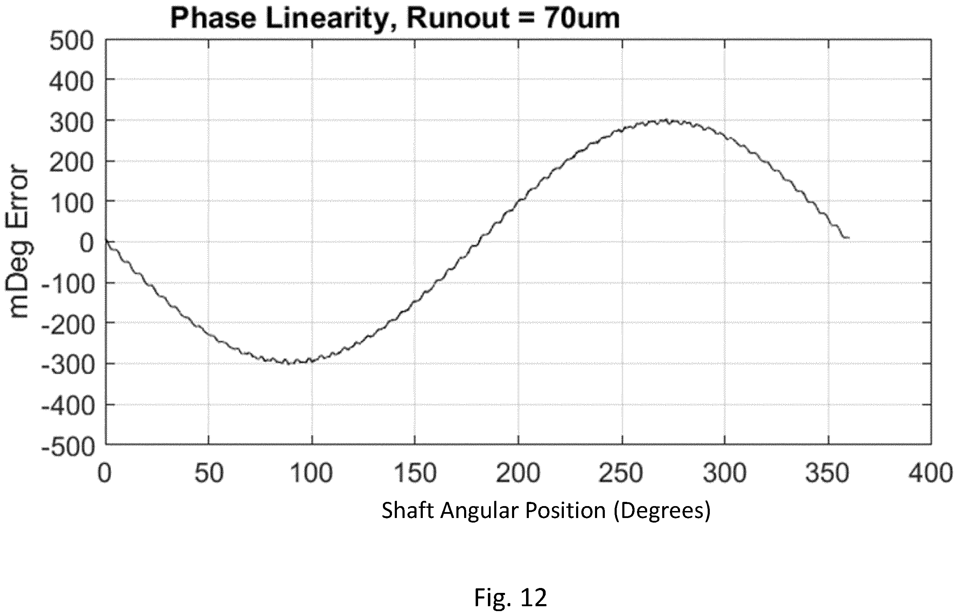

Figure 12 shows a representation of errors in the angular measurement signal 240 caused by a runout of $70\mu$m. As can be seen, at a shaft rotational angle of about 50°, there is an error of about -0.3° in the angular measurement 240, and at a shaft rotational angle of about 230°, there is an error of about +0.3° in the angular measurement 240. The inventors have realised that the error in the angular measurement signal 240 is correlated with the runout signal 620, in this example with an approximately 90° phase shift. This can be seen from Figure 7A and Figure 12, where the error in the angular measurement signal 240 of Figure 12 is similar to the runout signal 620 (eg, the first amplitude modulation signal of Figure 7A, or the runout change signal), but is phase shifted relative to the runout signal 620 by about 90° (eg, by about -90°).

With this realisation, the inventors have configured the corrector 1110 to generate a corrected angular measurement signal using the runout signal 620, which can then be applied to angular measurement signal 240 to generate the corrected angular measurement signal 1120 (where errors in the angular measurement are reduced or eliminated compared with the angular measurement signal 240).

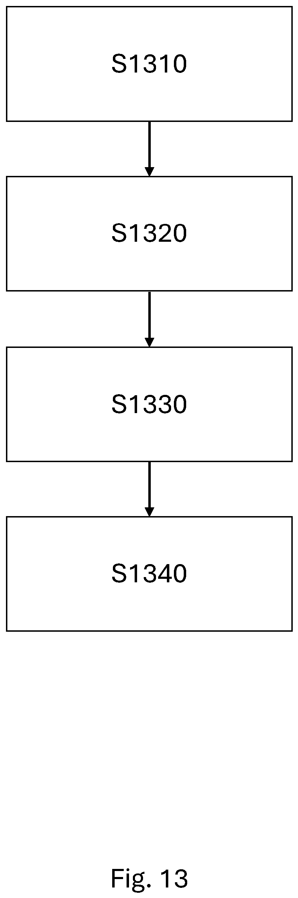

Figure 13 shows example process steps performed by the corrector 1110. In Step S1310, the corrector 1110 obtains the runout signal 620. This may be done by looking up the runout values (and corresponding angular positions of the rotating mechanical component) that have been stored in memory by the runout detector 610, or by receiving each runout value as it is determined by the runout detector 610. In the latter example, each received runout value may be accompanied with a corresponding measurement of shaft angular position, or the corrector 1110 may be able to determine this for itself, since it also receives the angular measurement signal 240, or each runout value may correspond to a predetermined shaft angle.

In Step S1320, the corrector 1120 generates an approximately quadrature version of the runout signal 620 (i.e., one that is within 10°, or within 5°, or within 1° of being orthogonal to the runout signal 240). This may be done in any suitable way that will be well understood by the skilled person, for example using a circular shift function, or similar. As explained earlier, in this particular example the runout signal 620 is phase shifted relative to the error in angular measurement signal 240 (Figure 12) by about 90°. Therefore, the approximately quadrature version of the runout signal 620 may be generated to be approximately -90° phase shifted relative to runout signal 620, such that the approximately quadrature version is in phase with the error in the angular measurement signal 240 (Figure 12).

In Step S1330, the corrector 1130 generates a correction signal by applying a predetermined scaling factor to the approximately quadrature version of the runout signal. The predetermined scaling factor can be set in a similar way to the conversion value described above with reference to Figure 10. For example, it may be determined in a laboratory by applying a known amount of runout to the rotating mechanical component and observing the runout signal 620 and the error in measurement of the rotational angle (Figure 12). The relationship between changes in the conversion value with changes in the distance between the target gear $110_1$ and the AMR sensor $120_1$ may be correlated with the way in which the scaling factor is affected by changes in the distance between the target gear $110_1$ and the AMR sensor $120_1$ (for example, if the conversion value changes by 10% for a particular change in the distance between the target gear $110_1$ and the AMR sensor $120_1$, the scaling factor may also change by 10%). The predetermined scaling factor may be set at a value that adjusts the magnitude of the approximately quadrature version of the runout signal to be approximately equal (for example, within reasonable limits, such as within +/- 2%, or +/- 5%, +/- 10%) to the magnitude of the error in measurement of the rotational angle. The correction signal may therefore be made up of a plurality of correction values, each corresponding to a different shaft angle. For example, for each predetermined shaft angle for which there is a runout value, there may also be a correction value for correcting the angular measurement 240. The correction values making up the correction signal may be stored in memory, for example in the same way as the runout values that make up the runout signal, so that they may then be used to correct the angular measurement 240.

In Step S1340, the corrector 1140 applies a correction to the angular measurement signal 240 using the correction signal in order to generate the corrected angular measurement signal 1120. In this example, since the correction signal is in phase with errors in the angular measurement signal 240 (Figure 12), the correction signal may be differenced with the angular measurement signal 240 in order to generate the corrected angular measurement signal 1120. If, however, the correction signal is generated in such a way that it is in anti-phase with the with errors in the angular measurement signal 240 (Figure 12), for example because it is generated by phase shifting the runout signal 620 by approximately +90°, applying the correction signal to the angular measurement signal 240 may instead comprise summing the two signals. For example, for a particular angular measurement value 240 (such as 40°, or 105°, etc) a suitable correction may be determined using the stored correction values of the correction signal. If the particular angular measurement value 240 does not have an exactly corresponding value in the stored correction signal (for example, the particular angular measurement value 240 is 185°, but there are only stored correction values corresponding to 180° and 192.5°), any suitable interpolation techniques may be used.

The corrector 1110 may be configured to use any suitable interpolation and extrapolation techniques in order to obtain from the look-up table a correction value for a particular received pair of angular measurement value 240 and runout value 620.

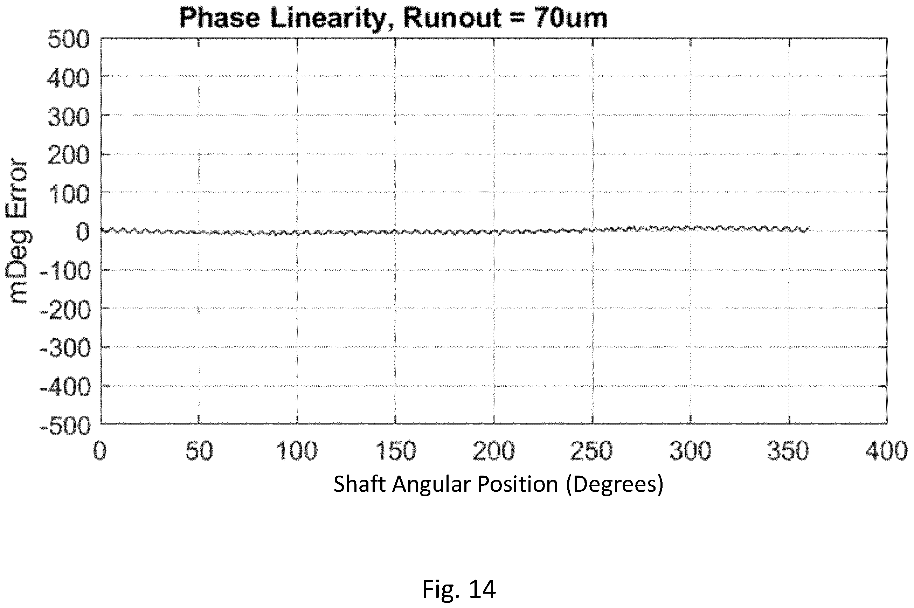

Figure 14 shows an example representation of errors in the corrected angular measurement signal 1120. Whilst it can be seen that in this particular example the corrected angular measurement signal 1120 is not error free, the amount of error is considerably reduced compared with that of the angular measurement signal 240 (which can be seen by comparing Figure 14 to Figure 12).

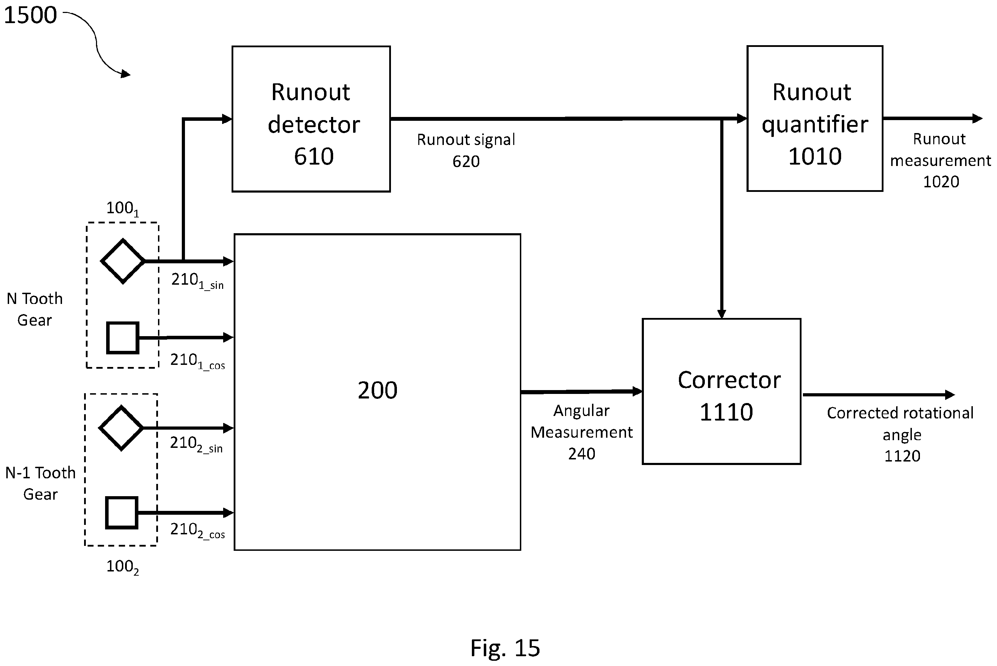

Figure 15 shows a further example system 1500 in accordance with an aspect of the present disclosure. In this example, the system 1500 comprises both the runout quantifier 1010 described above, and also the corrector 1110 described above.

In each of the examples described above, the runout detector 610 is configured to detect runout using a single angular position signal (in the specific examples given it is the first angular position signal $210_{1\_sin}$, but it could alternatively be any one of the second angular position signal $210_{1\_cos}$, the third angular position signal $210_{2\_sin}$ or the fourth angular position signal $210_{2\_cos}$).

Alternatively, the runout detector 610 may be configured to utilise two or more of the angular position signals in order to detect runout.

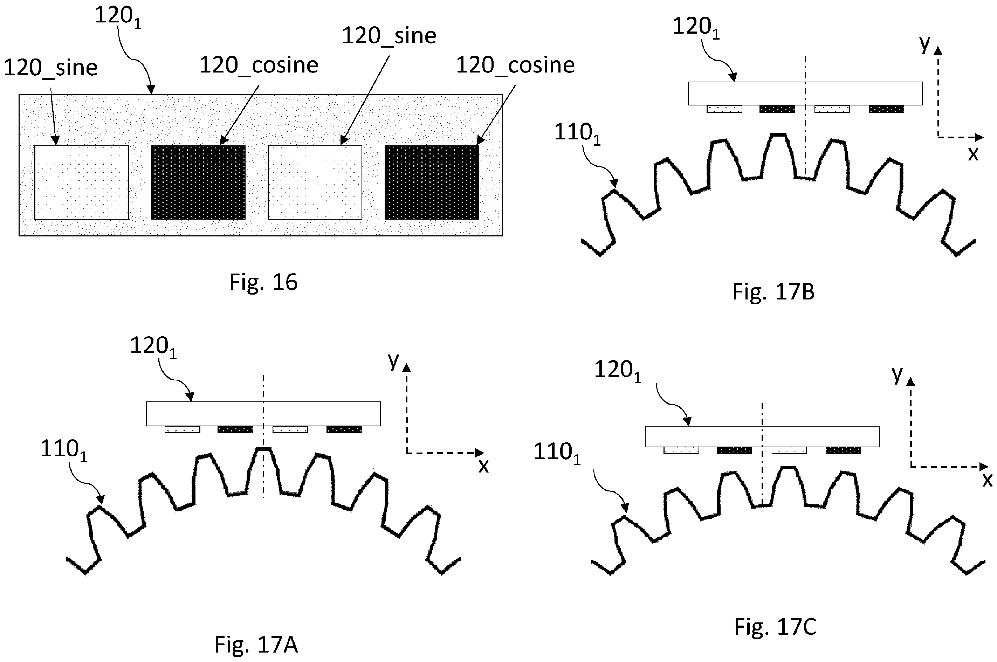

Figure 16 shows an example representation of sensor elements that make up the AMR sensor $120_1$ (the sensor elements for AMR sensor $120_2$ might also be oriented in the same way), viewed from a 'top down' perspective. In this example, there are four sensor elements: two labelled 120_sine and two labelled 120_cosine. The 120_sine elements contribute to the generation of the first angular position signal $210_{1\_sin}$ and the 120_cosine elements contribute to the generation of the second angular position signal $210_{1\_cos}$. The 120_sine elements and 120_cosine elements are interwoven, or alternate.

Figure 17A shows an example representation of the AMR sensor $120_1$ and its corresponding target gear $110_1$, viewed from a 'side-on' perspective. The vertical dotted line represents the centre of the AMR sensor $120_1$. At the moment represented in this figure, the runout of the rotating mechanical component is at 'top-dead centre', meaning that the runout displacement is entirely in the vertical, y-axis direction, with no runout displacement in the lateral, x-axis direction. From here on, we will refer to this position as a shaft angular position of 0°, with the component rotating in an anticlockwise direction.

At this moment, the centre of the shaft (and therefore the teeth of the target gear $110_1$) is exactly aligned with the centre of the AMR sensor $120_1$ and, as a result, the teeth of the target gear $110_1$ should have an equal effect on all of the sensor elements 120_sine and 120_cosine. The inventors have realised that as a result, the amplitude of the first angular position signal $210_{1\_sin}$ and second angular position signal $210_{1\_cos}$ should be substantially equal (ignoring any signal gain mismatch, which is explained in more detail below) to each other. Furthermore, the amplitude of the signals should be at their maximum, since the distance between the AMR sensor $120_1$ and the target gear $110_1$ is at its minimum. When the mechanical device rotates 180° from the orientation of Figure 17A, (eg, to a 'bottom-dead centre' orientation, with a shaft angular position of 180°), the centre of the shaft should again be exactly aligned with the centre of the AMR sensor $120_1$ and, consequently, the amplitude of the first angular position signal $210_{1\_sin}$ and second angular position signal $210_{1\_cos}$ should again be substantially equal to each other. However, because the centre of the shaft will now be at its most distance position in the vertical, y-axis direction from the AMR sensor $120_1$ (i.e., the distance between the AMR sensor $120_1$ and the teeth of the target gear should now be the same as that shown in Figure 17B plus 2x the runout), the amplitudes of the first angular position signal $210_{1\_sin}$ and second angular position signal $210_{1\_cos}$ should now be at their minimum.

Figure 17B shows an example representation of the AMR sensor $120_1$ and its corresponding target gear $110_1$ when the mechanical component as rotated to a position between the two orientations described above (i.e., rotated 90° anticlockwise from the orientation shown in Figure 17A, such that the shaft angular position is now 90°, or at its left-most position as viewed in Figure 17B). The inventors have realised that in this orientation, the teeth of the target gear $110_1$ no longer have an equal effect on the sensor elements 120_sine and 120_cosine. Instead, they have more of an effect on the 120_sine elements, such that the amplitude of the first angular position signal $210_{1\_sin}$ should be greater than the amplitude of the second angular position signal $210_{1\_cos}$.

Figure 17C shows an example representation of the AMR sensor $120_1$ and its corresponding target gear $110_1$ when the mechanical component has rotated to a position that is 180° from the orientation shown in Figure 17B (i.e., rotated 270° anticlockwise from the orientation shown in Figure 17A, such that the shaft angular position is now 270°, or at its right-most position as viewed in Figure 17B). The inventors have realised that in this orientation, the teeth of the target gear $110_1$ no longer have an equal effect on all of the sensor elements 120_sine and 120_cosine.

Instead, they have more of an effect on the 120_cos elements, such that the amplitude of the second angular position signal $210_{1\_cos}$ should be greater than the amplitude of the first angular position signal $210_{1\_sin}$.

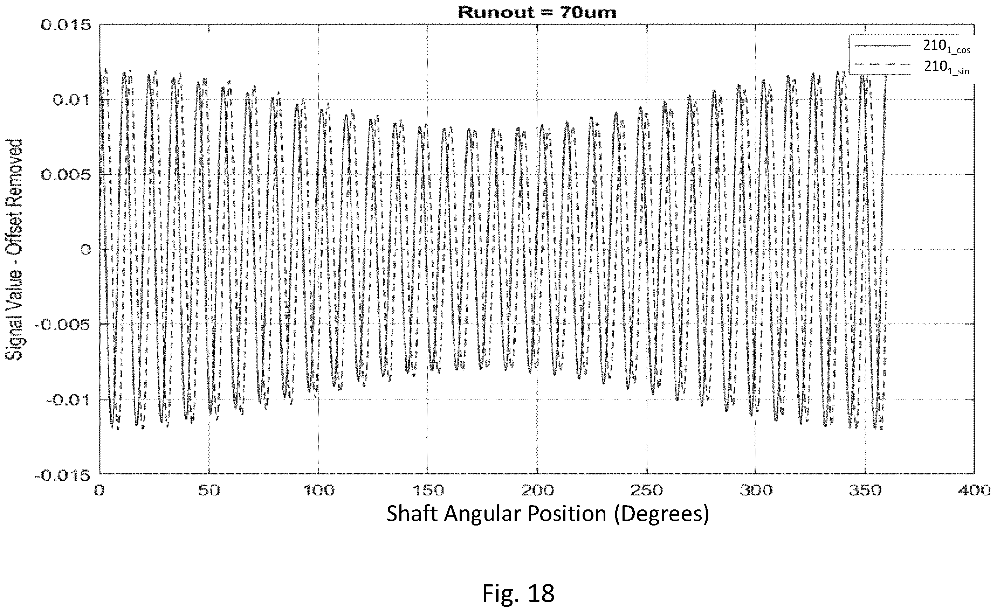

Figure 18 shows an example of this. This figure is very similar to that of Figure 5 and shows that at a shaft angular position of 90°, the amplitude of the second angular position signal $210_{1\_cos}$ is less than that of the first angular position signal $210_{1\_sin}$. At a shaft angular position of 0°/360° (eg, when the runout is at top-dead centre), the first angular position signal $210_{1\_sin}$ and second angular position signal $210_{1\_cos}$ have substantially the same amplitude, and they are at their maximum amplitudes. At a shaft angular position of 270°, the amplitude of first angular position signal $210_{1\_sin}$ is less than that of the second angular position signal $210_{1\_cos}$. At a shaft angular position of 180° (eg, when the runout is at bottom-dead centre), the first angular position signal $210_{1\_sin}$ and second angular position signal $210_{1\_cos}$ have substantially the same amplitude, and they are at their minimum amplitudes.

Based on these realisations, the inventors have recognised that the runout detector 610 may be configured to generate a first amplitude modulation signal representing the amplitude modulation the first angular position signal $210_{1\_sin}$ and a second amplitude modulation signal representing the amplitude modulation the second angular position signal $210_{1\_cos}$. Each of these amplitude modulation signals may be generated in exactly the same ways as described earlier. The runout detector 610 may then generate the runout signal 620 using the first and second amplitude modulation signals (or using first and second runout change signals, respectively determined using the first amplitude modulation signal and a first runout reference signal, and the second amplitude modulation signal and a second runout reference signal). In one example, the runout signal 620 may comprise a signal that results from differencing these two signals.

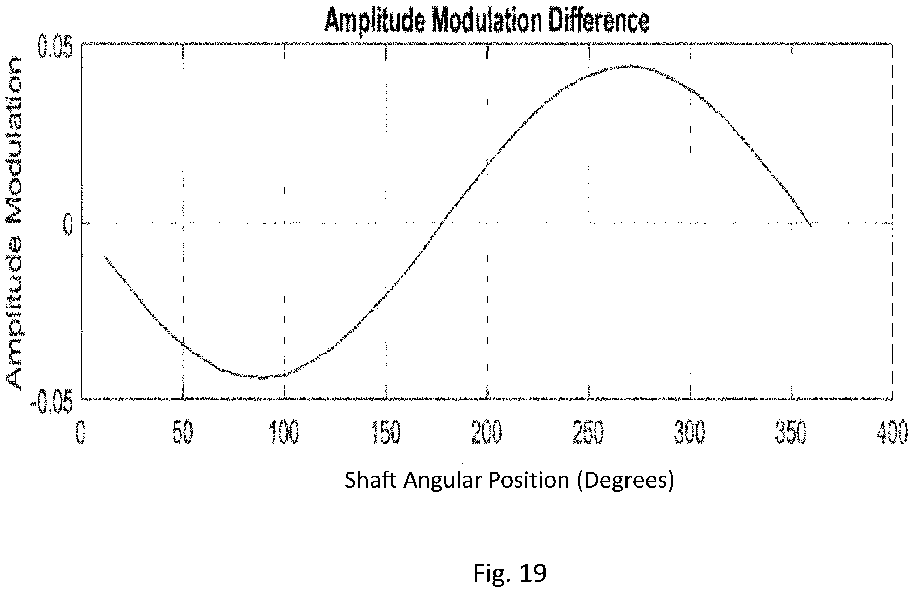

Figure 19 shows an example of the runout signal 620 when generated by differencing the first and second amplitude modulation signals (or the first and second runout change signals). The larger the runout of the rotating mechanical device in a particular direction, the larger the amplitude of the runout signal 620. In this example, the runout signal is indicative of the amount of horizontal, x-axis displacement. This is very similar to the earlier described techniques where the runout signal 620 is generated using only one angular position signal (except in those examples the runout signal is indicative of the amount of vertical, y-axis runout displacement). As such, the runout signal 620 may subsequently be used in exactly the same way as described above, for example by the runout quantifier 1010 and/or corrector 1110, although it may not be necessary for the corrector 1110 to phase shift the runout signal 620 as it should already be in phase with the error in angular measurement signal 240 (as can be seen by comparing Figures 12 and 19). In this case, it might only be necessary to apply a predetermined scaling factor (which can be determined in the same way as described above) in order to generate a phase correction signal.

In an alternative, rather than differencing the first and second amplitude modulation signals (or the first and second runout change signals), the runout signal 620 may be generated by finding the ratio of the two signals (for example, by dividing one signal by the other). This should result in a runout signal 620 that varies around a mid-point of 1 (since when the two signals are equal, their ratio will equal 1), or that varies around a mid-point of 0 if the runout signal 620 is determined by subtracting 1 from the ratio of the two signals.

As mentioned earlier, whilst at the times identified above the first angular position signal $210_{1\_sin}$ and second angular position signal $210_{1\_cos}$ should have substantially the same amplitude, in practice owing to imperfect signal gain for the two, they may not be exactly equal. However, by performing normalisation in the process of determining the first amplitude modulation signal and second amplitude modulation signal (eg, as described earlier with reference to Figure 7 and Step S720 i.e., Amplitude_modulation = Local_amplitude/average_amplitude -1) any signal imbalance should be resolved. Optionally, if the first and second amplitude modulation signals are used, rather than first and second runout change signals, a further step determining a runout change signal may be performed in the same way as described above with reference to Figure 8. For example, during calibration, a reference runout signal may be determined by finding the difference between, or the ratio of, the first and second amplitude modulation signals. The reference runout signal may then be stored in the same way as described above in relation to Figure 9. Then in the field, a change in runout signal may be generated by differencing, or ratioing, the first and second amplitude modulation signals, and then subtracting the reference runout signal. In this example, the runout signal 620 may comprise the change in runout signal.

The skilled person will readily appreciate that various alterations or modifications may be made to the above described aspects of the disclosure without departing from the scope of the disclosure.

For example, it has been recognised that in some implementations it may be preferable for the runout signal 620 to comprise two or more different signals. For example, it may comprise the first amplitude modulation signal (and/or runout change signal determined using the first amplitude modulation signal) and also comprise the signal described above with reference to Figure 19 (i.e., the signal generated using the first and second amplitude modulation signals, or the first and second runout change signals). This is because those two signals describe an amount of runout in different directions, for example in the vertical y-axis direction and in the horizontal a-axis direction. This may be helpful for a number of reasons.

For example, in some situations, a non-circular runout may occur, such as an elliptical runout, which may be detected by considering both signals. In other examples, it may be found that one of the signals more accurately describes the amount of runout taking place and the other of the signals more accurately corrects errors in the angular measurement 240, so it is beneficial to generate a runout signal 620 using both techniques of Figures 6 to 15, and Figures 16 to 19.

The system diagrams of Figures 2, 6, 8, 10, 11 and 15 all show different functional units of various system implementations of the present disclosure. It should be appreciated that each of these functional units may be implemented using software, hardware, or a combination of software and hardware. For example, the functionality of the runout detector 610, runout quantifier 1010 and corrector 1110 may each be implemented in software comprising computer readable code, which when executed on the processor of an electronic device (such as a microcontroller, or microprocessor of a computer device) cause the processes described above to be performed. Each of the units/functions described above may be different logical functions within the same software, or may each be implemented in separate software packages. Therefore, the features of the present disclosure may be implemented on one or more product packages or chips (such ones comprising memory storing the software and one or more processors for executing the code) with one or more input interfaces for receiving one or more angular position signals and optionally one or more output interfaces, for example for outputting the runout measurement and/or corrected rotational angle 1120.

The software may be stored on any suitable computer readable medium, for example a non-transitory computer-readable medium, such as read-only memory, random access memory, CD-ROMs, DVDs, Blue-rays, magnetic tape, hard disk drives, solid state drives and optical drives. Optionally, the disclosure of the present invention may be implemented by virtue of a software or firmware update to an existing angular position determination system 200. In this way, the additional runout detection functionality may be added to existing systems.

## Aspects of the disclosure

Non-limiting aspects of the disclosure are set out in the following numbered clauses:

1. A system for detecting runout of a rotating mechanical component, the system being configured to:

   receive a first angular position signal from a first magnetic angular position sensor arranged for use in determining an angular position of the rotating mechanical component; and
   detect runout of the rotating mechanical component using the first angular position signal.

2. The system of clause 1, wherein detecting runout of the rotating mechanical component comprises determining a maximum runout value indicative of a maximum magnitude of runout of the rotating mechanical component.

3. The system of clause 2, further configured to:

   compare the maximum runout value against a runout threshold; and
   if the maximum runout value exceeds the runout threshold, perform a predetermined action.

4. The system of clause 3, wherein the predetermined action comprises any one or more of :

   causing rotation of the mechanical component to cease;
   outputting a notification that the runout threshold has been exceeded.

5. The system of any preceding clause, wherein detecting runout of the rotating mechanical component comprises determining a runout signal indicative of runout at a plurality of different angular positions of the rotating mechanical component.

6. The system of clause 5, further configured to:

   receive an angular measurement signal indicative of the angular position of the rotating mechanical component; and
   generate a corrected angular measurement signal using the angular measurement signal and the runout signal.

7. The system of clause 6, wherein generating the corrected angular measurement signal comprises:

   generating a quadrature version of the runout signal; and
   using the quadrature version of the runout signal to generate the corrected angular measurement signal.

8. The system of clause 7, wherein generating the corrected angular measurement signal further comprises:

   generating a correction signal by applying a predetermined scaling factor to the quadrature version of the runout signal; and
   generating the corrected angular measurement signal based on the correction signal to the angular measurement signal.

9. The system of any of clauses 5 to 8, wherein determining the runout signal comprises:
determining a first amplitude modulation signal using the first angular position signal, wherein the first amplitude modulation signal is indicative of an amplitude modulation of the first angular position signal.

10. The system of clause 9, wherein determining the runout signal further comprises determining a runout change signal based on the first amplitude modulation signal and a reference runout signal, wherein the runout change signal is indicative of a change in runout compared with the reference runout signal.

11. The system of clause 10, wherein the reference runout signal is indicative of the runout of the rotating mechanical component at a time of calibration of the rotating mechanical component.

12. The system of clause 10 or clause 11, wherein the runout signal comprises the runout change signal.

13. The system of any of clauses 9 to 12, wherein detecting runout of the rotating mechanical component further comprises determining a maximum runout value indicative of a maximum magnitude of runout of the rotating mechanical component, and
wherein determining the maximum runout value comprises identifying an extrema of the runout signal.

14. The system of clause 13, further configured to determine a runout measurement using the maximum runout value, wherein determining the runout measurement comprises multiplying the maximum runout value by a conversion value, wherein the conversion value is a predetermined value for converting a runout value to a measurement of runout.

15. The system of any of clauses 9 to 14, further configured to:

receive a second angular position signal from the first magnetic angular position sensor;
determine a second amplitude modulation signal using the second angular position signal, wherein the second amplitude modulation signal is indicative an amplitude modulation of the second angular position signal; and
generate the runout signal based on the first amplitude modulation signal and the second amplitude modulation signal.

16. The system of clause 15, wherein generating the runout signal comprises one of:

differencing the first amplitude modulation signal and the second amplitude modulation signal;
determining a ratio of the first amplitude modulation signal and the second amplitude modulation signal.

17. The system of clause 15 or clause 16, wherein the first angular position signal and the second angular position signal are notionally quadrature signals.

18. The system of any preceding clause, wherein the first magnetic angular position sensor is an anisotropic magnetoresistive, AMR, sensor.

19. A method for detecting runout of a rotating mechanical component, the method comprising:

receiving a first angular position signal from a first magnetic angular position sensor arranged for use in determining an angular position of the rotating mechanical component; and
detecting runout of the rotating mechanical component using the first angular position signal.

20. The method of clause 19, wherein detecting runout of the rotating mechanical component comprises determining a maximum runout value indicative of a maximum magnitude of runout of the rotating mechanical component.

21. The method of clause 20, further comprising:

comparing the maximum runout value against a runout threshold; and
if the maximum runout value exceeds the runout threshold, performing a predetermined action.

22. The method of clause 21, wherein the predetermined action comprises any one or more of :

causing rotation of the mechanical component to cease;
outputting a notification that the runout threshold has been exceeded.

23. The method of any of clauses 19 to 22, wherein detecting runout of the rotating mechanical component comprises determining a runout signal indicative of runout at a plurality of different angular positions of the rotating mechanical component.

24. The method of clause 23, further comprising:

receiving an angular measurement signal indicative of the angular position of the rotating mechanical component; and
generating a corrected angular measurement signal using the angular measurement signal and the runout signal.

25. The method of clause 24, wherein generating the corrected angular measurement signal comprises:

generating a quadrature version of the runout signal; and
using the quadrature version of the runout signal to generate the corrected angular measurement signal.

26. The method of clause 25, wherein generating the corrected angular measurement signal further comprises:

generating a correction signal by applying a predetermining scaling factor to the quadrature version of the runout signal; and
generating the corrected angular measurement signal by applying the correction signal to the angular measurement signal.

27. The method of any of clauses 23 to 26, wherein determining the runout signal comprises:
determining a first amplitude modulation signal using the first angular position signal, wherein the first amplitude modulation signal is indicative of an amplitude modulation of the first angular position signal.

28. The method of clause 27, wherein determination of the runout signal further comprises determining a runout change signal based on the first amplitude modulation signal and a reference runout signal, wherein the runout change signal is indicative of a change in runout compared with the reference runout signal.

29. The method of clause 28, wherein the reference runout signal is indicative of the runout of the rotating mechanical component at a time of calibration of the rotating mechanical component.

30. The method of clause 28 or clause 29, wherein the runout signal comprises the runout change signal.

31. The method of any of clauses 27 to 30, wherein detecting runout of the rotating mechanical component further comprises determining a maximum runout value indicative of a maximum magnitude of runout of the rotating mechanical component, and
wherein determining the maximum runout value comprises identifying an extrema of the runout signal.

32. The method of clause 31, further comprising determining a runout measurement using the maximum runout value, wherein determining the runout measurement comprises multiplying the maximum runout value by a conversion value, wherein the conversion value is a predetermined value for converting a runout value to a measurement of runout.

33. The method of any of clauses 27 to 32, further comprising:

receiving a second angular position signal from the first magnetic angular position sensor;
determining a second amplitude modulation signal using the second angular position signal, wherein the second amplitude modulation signal is indicative an amplitude modulation of the second angular position signal; and
generating the runout signal based on the first amplitude modulation signal and the second amplitude modulation signal.

34. The method of clause 24, wherein generating the runout signal comprises one of:

differencing the first amplitude modulation signal and the second amplitude modulation signal;
determining a ratio of the first amplitude modulation signal and the second amplitude modulation signal.

35. The method of clause 33 or clause 34, wherein the first angular position signal and the second angular position signal are notionally quadrature signals.

36. The method of any of clauses 19 to 35, wherein the first magnetic angular position sensor is an anisotropic magnetoresistive, AMR, sensor.

37. A computer program comprising instructions configured, when executed, to cause at least one processor of an electronic device to perform the method of any of clauses 19 to 36.

38. A computer program comprising instructions configured, when executed, to cause at least one processor of an electronic device to:
detect runout of a rotating mechanical component using a first angular position signal generated by a first magnetic angular position sensor that is arranged for use in determining an angular position of the rotating mechanical component.

**Claims**

1. A system for detecting runout of a rotating mechanical component, the system being configured to:

   receive a first angular position signal from a first magnetic angular position sensor arranged for use in determining an angular position of the rotating mechanical component; and
   detect runout of the rotating mechanical component using the first angular position signal.

2. The system of claim 1, wherein detecting runout of the rotating mechanical component comprises determining a maximum runout value indicative of a maximum magnitude of runout of the rotating mechanical component.

3. The system of claim 2, further configured to:

   compare the maximum runout value against a runout threshold; and
   if the maximum runout value exceeds the runout threshold, perform a predetermined action.

4. The system of claim 3, wherein the predetermined action comprises any one or more of :

   causing rotation of the mechanical component to cease;
   outputting a notification that the runout threshold has been exceeded.

5. The system of any preceding claim, wherein detecting runout of the rotating mechanical component comprises determining a runout signal indicative of runout at a plurality of different angular positions of the rotating mechanical component.

6. The system of claim 5, further configured to:

   receive an angular measurement signal indicative of the angular position of the rotating mechanical component; and
   generate a corrected angular measurement signal using the angular measurement signal and the runout signal.

7. The system of claim 6, wherein generating the corrected angular measurement signal comprises:

   generating a quadrature version of the runout signal; and
   using the quadrature version of the runout signal to generate the corrected angular measurement signal,
   and optionally further comprises:

      generating a correction signal by applying a predetermined scaling factor to the quadrature version of the runout signal; and

generating the corrected angular measurement signal based on the correction signal to the angular measurement signal.

8. The system of any of claims 5 to 7, wherein determining the runout signal comprises:
determining a first amplitude modulation signal using the first angular position signal, wherein the first amplitude modulation signal is indicative of an amplitude modulation of the first angular position signal, and optionally further comprises determining a runout change signal based on the first amplitude modulation signal and a reference runout signal, wherein the runout change signal is indicative of a change in runout compared with the reference runout signal.

9. The system of claim 8, wherein the reference runout signal is indicative of the runout of the rotating mechanical component at a time of calibration of the rotating mechanical component,
wherein, optionally, the runout signal comprises the runout change signal.

10. The system of claim 8 or claim 9, wherein detecting runout of the rotating mechanical component further comprises determining a maximum runout value indicative of a maximum magnitude of runout of the rotating mechanical component, and
wherein determining the maximum runout value comprises identifying an extrema of the runout signal.

11. The system of claim 10, further configured to determine a runout measurement using the maximum runout value, wherein determining the runout measurement comprises multiplying the maximum runout value by a conversion value, wherein the conversion value is a predetermined value for converting a runout value to a measurement of runout.

12. The system of any of claims 8 to 11, further configured to:

receive a second angular position signal from the first magnetic angular position sensor;
determine a second amplitude modulation signal using the second angular position signal, wherein the second amplitude modulation signal is indicative an amplitude modulation of the second angular position signal; and
generate the runout signal based on the first amplitude modulation signal and the second amplitude modulation signal.

13. The system of claim 12, wherein generating the runout signal comprises one of:

differencing the first amplitude modulation signal and the second amplitude modulation signal;
determining a ratio of the first amplitude modulation signal and the second amplitude modulation signal,
wherein, optionally, the first angular position signal and the second angular position signal are notionally quadrature signals.

14. A method for detecting runout of a rotating mechanical component, the method comprising:

receiving a first angular position signal from a first magnetic angular position sensor arranged for use in determining an angular position of the rotating mechanical component; and
detecting runout of the rotating mechanical component using the first angular position signal.

15. A computer program comprising instructions configured, when executed, to cause at least one processor of an electronic device to:
detect runout of a rotating mechanical component using a first angular position signal generated by a first magnetic angular position sensor that is arranged for use in determining an angular position of the rotating mechanical component.

Fig. 1

Fig. 2

200

230

Phase Calibration Table 234

Combine 232

Σ
−
+

Angular measurement 240

$228_1$

$228_2$

$220_1$

$220_2$

Offset and Amplitude 224

Center and Scale $222_{1\_sin}$

Center and Scale $222_{1\_cos}$

Center and Scale $222_{2\_sin}$

Center and Scale $222_{2\_cos}$

Phase Decode $226_1$

Phase Decode $226_2$

sin(A)

cos(A)

sin(B)

cos(B)

$210_{1\_sin}$

$210_{1\_cos}$

$210_{2\_sin}$

$210_{2\_cos}$

$120_1$

$120_2$

N Tooth Gear

N-1 Tooth Gear

Fig. 3

Fig. 4

Fig. 5

EP 4 696 990 A1

EP 4 696 990 A1

600

Runout detector 610

Runout signal 620

$100_1$

N Tooth Gear

$210_{1\_sin}$

$210_{1\_cos}$

N-1 Tooth Gear

$100_2$

$210_{2\_sin}$

$210_{2\_cos}$

200

Angular Measurement 240

Fig. 6

**Sin Amplitude Modulation**

Shaft Angular Position (Degrees)

Fig. 7A

EP 4 696 990 A1

```
┌─────────────────────────┐
│                         │
│          S710           │
│                         │
└────────────┬────────────┘
             │
             ▼
┌─────────────────────────┐
│                         │
│          S720           │
│                         │
└─────────────────────────┘
```

Fig. 7B

600

## Runout detector 610

614

612

$\Sigma$

Runout signal 620

$100_1$

N Tooth
Gear

$210_{1\_sin}$

$210_{1\_cos}$

$100_2$

N-1 Tooth
Gear

$210_{2\_sin}$

$210_{2\_cos}$

200

Angular
Measurement
240

Fig. 8

Start

S910

S920

No

S930

Yes

S940

Finish

Fig. 9A

S710

S720

S960

S970

Fig. 9B

EP 4 696 990 A1

1000

Runout
detector
610

Runout signal
620

Runout
quantifier
1010

Runout measurement
1020

$100_1$

N Tooth
Gear

$210_{1\_sin}$

$210_{1\_cos}$

N-1 Tooth
Gear

$210_{2\_sin}$

$210_{2\_cos}$

$100_2$

200

Angular
Measurement
240

Fig. 10

1100

Runout
detector
610

Runout signal
620

$100_1$

N Tooth
Gear

$210_{1\_sin}$

$210_{1\_cos}$

$100_2$

N-1 Tooth
Gear

$210_{2\_sin}$

$210_{2\_cos}$

200

Angular
Measurement
240

Corrector
1110

Corrected angular
measurement 1120

Fig. 11

Phase Linearity, Runout = 70um

mDeg Error vs. Shaft Angular Position (Degrees)

Fig. 12

S1310

S1320

S1330

S1340

Fig. 13

Fig. 14

```
                    ┌─────────────┐                          ┌─────────────┐
                    │   Runout    │                          │   Runout    │
              ┌────→│  detector   │──Runout signal──────────→│ quantifier  │──→ Runout
              │     │     610     │      620         │        │    1010     │  measurement
              │     └─────────────┘                  │        └─────────────┘     1020
              │                                      │
      100₁    │                                      │
  ┌ ─ ─ ─ ─ ┐ │     ┌──────────────────────┐         │
  │  ◇      │─┘     │                      │         │
  │         │──────→│                      │         │
  │ 210₁_sin│       │                      │         ↓
  │         │       │                      │        ┌─────────────┐
N Tooth     │       │                      │        │             │
 Gear │  □  │       │                      │        │             │
  │         │──────→│         200          │        │  Corrector  │
  │ 210₁_cos│       │                      │        │    1110     │──→ Corrected rotational
  └ ─ ─ ─ ─ ┘       │                      │  Angular│             │         angle
                    │                      │Measurement→           │         1120
  ┌ ─ ─ ─ ─ ┐       │                      │   240   └─────────────┘
  │  ◇      │──────→│                      │
  │         │       │                      │
  │ 210₂_sin│       │                      │
N-1 Tooth   │       │                      │
 Gear │  □  │       │                      │
  │         │──────→│                      │
  │ 210₂_cos│       └──────────────────────┘
  └ ─ ─ ─ ─ ┘
      100₂
```

Fig. 15

EP 4 696 990 A1

Fig. 16

Fig. 17B

Fig. 17A

Fig. 17C

EP 4 696 990 A1

Fig. 18

Fig. 19

Europäisches Patentamt

European Patent Office

Office européen des brevets

# EUROPEAN SEARCH REPORT

**Application Number**

EP 25 19 0878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 10 900 814 B2 (INFINEON TECHNOLOGIES AG [DE]) 26 January 2021 (2021-01-26)<br>* column 2, line 35 - column 16, line 7; figures 1-5 * | 1-5,8,9, 14,15<br>7 | INV.<br>G01D5/244 |
| X | US 5 202 842 A (SUZUKI MASUMI [JP]) 13 April 1993 (1993-04-13)<br>* column 2, line 49 - column 4, line 15; figures 1-5 * | 1,2,5,6, 8,10-15 | |
| X | US 2024/167805 A1 (TOULON DARIGA [FR] ET AL) 23 May 2024 (2024-05-23)<br>* paragraph [0006] - paragraph [0090]; figures 1-5 * | 1,14,15 | |
| X | JP 2012 093253 A (TOKYO SEIMITSU CO LTD) 17 May 2012 (2012-05-17)<br>* paragraph [0027] - paragraph [0089]; figures 1-14 * | 1,14,15 | |

**TECHNICAL FIELDS SEARCHED (IPC)**

G01D

The present search report has been drawn up for all claims

| Place of search | Date of completion of the search | Examiner |
|---|---|---|
| Munich | 5 January 2026 | Lyons, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0878

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2026

| Patent document cited in search report | | Publication date | Patent family member(s) | | Publication date |
|---|---|---|---|---|---|
| US 10900814 | B2 | 26-01-2021 | NONE | | |
| US 5202842 | A | 13-04-1993 | NONE | | |
| US 2024167805 | A1 | 23-05-2024 | CN | 118066989 A | 24-05-2024 |
| | | | FR | 3142248 A1 | 24-05-2024 |
| | | | FR | 3142249 A1 | 24-05-2024 |
| | | | US | 2024167805 A1 | 23-05-2024 |
| JP 2012093253 | A | 17-05-2012 | JP | 5656110 B2 | 21-01-2015 |
| | | | JP | 2012093253 A | 17-05-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 80725424